# EUROPÄISCHE PATENTSCHRIFT

(11) **EP 0 574 679 B1**
(45) Veröffentlichungstag und Bekanntmachung des Hinweises auf die Patenterteilung: **22.07.1998**
(21) Anmeldenummer: 93106768.0
(22) Anmeldetag: 26.04.1993
(51) Int. Cl.: B30B 9/30, A01F 15/07

(54) **Ballenpresse**
Baling press
Presse à balles

(30) Priorität: 27.04.1992 DE 4213617
(43) Veröffentlichungstag der Anmeldung: 22.12.1993
(73) Patentinhaber: Sanpack Lagertechnik GmbH, 21035 Hamburg (DE)
(72) Erfinder: Bergemann, Thomas, D-2000 Hamburg 70 (DE); Eichstädt, Hans-Peter, D-2050 Hamburg 80 (DE); Grahlher, Klaus, D-21110 Buchholz i.d.N. (DE)
(74) Vertreter: Heldt, Gert, Dr. Dipl.-Ing.

(56) Entgegenhaltungen:
- EP-A- 0 004 314
- EP-A- 0 514 334
- DE-B- 1 222 653
- DE-U- 9 106 917

## Beschreibung

Die Erfindung betrifft eine Ballenpresse zum Formen von im wesentlichen zylindrischen Ballen aus Kartonagen-, Papier- oder Folienabfällen oder derartigem Material, bei der das einem Ballenraum zuführbare Material im Ballenraum von mindestens einem den Ballenraum parallel zu einer den fertigen Ballen durchziehenden Zylinderachse mindestens teilweise umschließenden, antreibbaren Mitnahmeband in eine Drehbewegung versetzbar und dabei von dem mindestens bereichsweise gegen das Material anpressbaren Mitnahmeband verdichtbar ist, mit mindestens einer von einem der Mitnahmebänder mindestens teilweise umschlungenen motorisch antreibbaren Antriebsrolle, an der das Mitnahmeband mit seiner dem Ballen zugewandten Deckseite anliegt.

Aus der EP-A-0 514 334 ist eine Anpresseinrichtung bekannt geworden, die zwei Mitnahmebänder besitzt, mit deren Hilfe Druckprodukte wie Zeitungen, Zeitschriften und dergleichen zu rohrförmigen Packeten gepresst werden. Diese Wickelmaschine besitzt einen Wickeldorn, um den die Produkte gewickelt werden. Das Anpressen der Druckproduckte zunächst an den Wickeldorn und schließlich an die auf den Wickeldorne aufgewickelten unteren Schichten von Druckprodukten geschieht mit Hilfe von zwei Riemen, die jeweils über verschiedene Sektoren des Wickels gespannt sind und diese in Richtung auf eine Mittelachse des Dorns beaufschlagen. Für eine nachgiebige Beaufschlagung der Oberfläche sorgen einerseits der um eine Schwenkachse verschwenkbare Bandförderer und andererseits ein um eine Schwenkachse verschwenkbarer Schwenkarm. Jeweils einer der beiden Riemen wird über den Schwenkarm und den Bandförderer geführt.

Im Falle von Wartungsarbeiten oder bei Ersatz eines der beiden Bänder müssen umfangreiche Einstellarbeiten vorgenommen werden, um die Spannung des Mitnahmebandes einerseits und die Winkelstellung des Bandförderers bzw. des Schwenkarmes so aufeinander einzustellen, daß der Wickel mit der gewünschten Dichtigkeit entsteht, ohne daß die Gefahr besteht, daß in Betrieb eines der beiden Mitnahmebänder so hoch belastet wird, daß es reißt.

Ausgehend hiervon liegt der Erfindung die Aufgabe zugrunde, eine Ballenpresse der eingangs genannten Art dahingehend zu verbessern, daß ein Ausbau des Mitnahmebandes bei Wartungsarbeiten erleichtert wird.

Diese Aufgabe wird erfindungsgemäß dadurch gelöst, daß das Mitnahmeband unter Zugspannung derart über Umlenkungrollen geführt ist, daß einander gegenüberliegende Bereiche des Mitnahmebandes beim Zuführen von Material zum im wesentlichen zylindrischen Ballenraum zurückweichen.

Bei einer derartiegen Anordnung wird die Antriebsrolle nicht von der vom Mitnahmeband gebildeten Bandschleife umfaßt, so daß ihr Ausbau bei einem Wechsel des Mitnahmebandes nicht erforderlich ist.

Ein weiterer Vorteil einer derartigen Anordnung besteht darin, daß für die vom Ballenraum und von der Antriebsrolle abgewandte Rückseite des Mitnahmebands weder eine Beschichtung mit einer Decklage aus Gummi erforderlich noch eine bestimmte Oberflächenrauhigkeit vorgeschrieben ist, so daß die Herrstellungskosten für das Mitnahmeband gesenkt werden können.

Eine bevorzugte Ausgestaltung der Erfindung sieht vor, daß das Mitnahmeband unter Bildung eines sich nach oben öffnenden keilförmigen Spaltes unter Zugspannung derart über Umlenkrollen geführt ist, daß einander gegenüberliegende Bereiche des Mitnahmebandes beim Zuführen von Material in den keilförmigen Spalt unter Aufweitung des Spaltes zum im wesentlich zylindrischen Ballenraum zurückweichen. Dadurch wird gewährleistet, daß einander gegenüberliegende Bereiche des Mitnahmebandes unter Druck gegen das im Ballenraum in Drehbewegung versetzte Material anliegen und dieses dabei zum Zylinderballen verdichten, wobei sich die Größe des Ballenraums automatisch an die Größe des im Ballenraum befindlichen Zylinderballens anpaßt.

Zwar ist es grundsätzlich möglich, in Richtung der Zylinderachse der fertigen Zylinderballen mehrere, mit ihren Kanten aneinander anstoßende oder einander überlappende Mitnahmebänder nebeneinander anzuordnen, jedoch wird gemäß einer weiteren bevorzugten Ausführungsform der Erfindung vorgeschlagen, daß sich das Mitnahmeband über die gesamte Breite des Ballenraums erstreckt.

Eine bevorzugte Ausgestaltung der Erfindung sieht vor, daß der Ballenraum von einem einzigen Mitnahmeband umschlossen ist. Dies hat gegenüber der eingangs genannten bekannten Ballenpresse zusätzlich den Vorteil, daß eine gleichmäßige Abnutzung des Mitnahmebands erfolgt, während bei der bekannten Ballenpresse das kürzere Band aufgrund des häufigen Kontakts mit dem Material im Ballenraum einem größeren Verschleiß unterliegt und daher häufiger ausgetauscht werden muß.

Der Umschlingungswinkel des Mitnahmebands auf der Antriebsrolle beträgt zweckmäßig mehr als 270 Grad, vorzugsweise mehr als 300 Grad. Ein derart grober Umschlingungswinkel kann dadurch erreicht werden, daß das auf die Antriebsrolle auflaufende und das von der Antriebsrolle ablaufende Trum des Mitnahmebands zwischen zwei in geringem Abstand voneinander angeordneten Umlenkrollen hindurchgeführt werden. Zur Vermeidung von Reibung zwischen den in entgegengesetzter Richtung bewegten Bandabschnitten bleibt zweckmäßig zwischen dem ablaufenden und dem auflaufenden Trum ein schmaler Spalt frei. Im Unterschied zu der bekannten Ballenpresse, bei der sich der Spalt zwischen den beiden Mitnahmebändern bei zunehmendem Ballendurchmesser vergrößert, bleibt der Spalt der erfindungsgemäßen Anordnung unverändert, wobei ein oberhalb des Spalts im Ballenraum angeordneter Abstreifer zusätzlich das Eindringen von Material in den Spalt verhindern kann.

Gemäß einer weiteren bevorzugten Ausgestaltung der Erfindung weist die Ballenpresse eine verschwenkbare Entnahmeklappe auf, in der mindestens eine Umlenkrolle für das Mitnahmeband gelagert ist, so daß sich der Ballenraum beim Aufschwenken der Entnahmeklappe unter Freigabe des fertigen Zylinderballens öffnet. Zweckmäßigerweise ist die Entnahmeklappe um eine zur Zylinderachse des fertigen Zylinderballens parallele Achse nach unten verschwenkbar, wobei die Oberseite der geöffneten Entnahmeklappe durch das Mitnahmeband gebildet ist, so daß der fertige Zylinderballen auf dem Mitnahmeband herausgerollt oder durch Antreiben des Mitnahmebandes aus dem Ballenraum heraustransportierbar ist.

Eine weitere bevorzugte Ausgestaltung der Erfindung sieht vor, daß der schmale Spalt zwischen dem von der Antriebsrolle ablaufenden und dem auf die Antriebsrolle auflaufenden Trum des Mitnahmebandes beim Öffnen der Entnahmeklappe vergrößert wird, wodurch die der Deckseite des Mitnahmebandes zugewandte Umfangsfläche der Antriebsrolle zugänglich wird.

Gemäß einer weiteren bevorzugten Ausgestaltung der Erfindung ist zusätzlich zu dem oder den antreibbaren Mitnahmebändern mindestens ein weiteres frei beweglich gelagertes Band vorgesehen, das beim Berühren oder Anpressen des eingezogenen Materials oder des Zylinderballens von diesem durch die Reibung zwischen dem eingezogenen Material bzw. dem Zylinderballen und dem eingezogenen Material bzw. dem Zylinderballen zugewandten Trum des nicht angetriebenen Bands in Bewegung gesetzt wird. Ein derartiges frei bewegliche Band kann beispielsweise im Bereich des unteren Endes des Einzugsschachtes angeordnet sein und/oder eine Leitfläche des Einzugsschachts bilden. Es kann jedoch auch den Ballenraum auf der Seite der Entnahmeklappe begrenzen.

Im folgenden wird die Erfindung anhand zweier in schematischer Weise dargestellter Ausführungsbeispiele näher erläutert. Es zeigen:
- Fig. 1:: einen senkrechten Schnitt durch eine erfindungsgemäße, ein einziges Mitnahmeband aufweisende Ballenpresse mit leerem Ballenraum,
- Fig. 2:: einen entsprechenden Schnitt durch die Ballenpresse aus Figur 1 mit gefülltem Ballenraum und geschlossener Entnahmeklappe,
- Fig. 3:: einen entsprechenden Schnitt durch die Ballenpresse aus Figur 1 und 2 mit geöffneter Entnahmeklappe,
- Fig. 4:: eine Seitenansicht der Ballenpresse aus den Figuren 1 bis 3 mit abgenommener Seitenverkleidung und
- Fig. 5:: einen senkrechten Schnitt durch eine weitere Ballenpresse mit einem zusätzlichen Band.

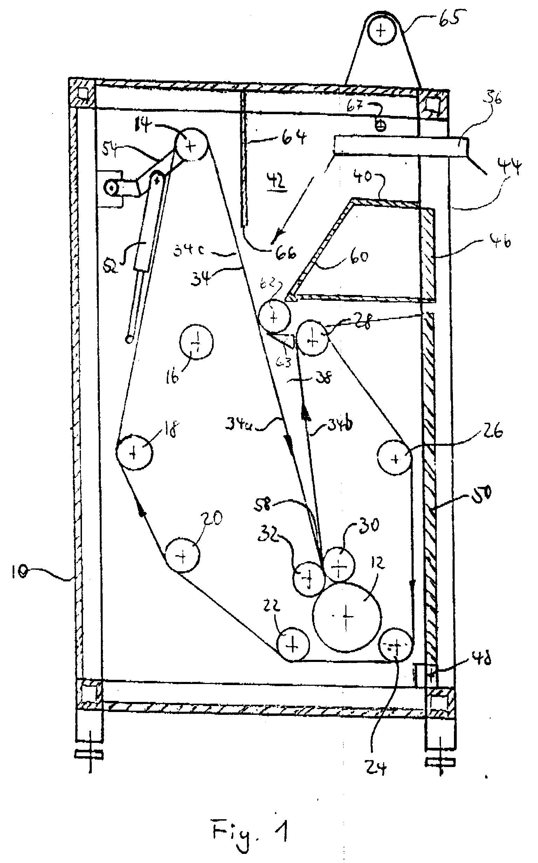

Die in der Zeichnung dargestellte Ballenpresse besteht im wesentlichen aus einem Pressengehäuse (10) sowie einem im Pressengehäuse (10) über eine motorisch angetriebene Antriebsrolle (12) sowie mehrere Umlenkrollen (14, 16, 18, 20, 22, 24, 26, 28, 30, 32) geführten endlosen Mitnahmeband (34), dessen einander gegenüberliegende und in entgegengesetzter Richtung angetriebene Bandbereiche (34a, 34b) vor dem Zuführen von Material (Fig.1) einen sich nach oben öffnenden keilförmigen Spalt (38) bilden, dem das lose, zu verdichtende, aus Kartonagen-, Papier- oder Folienabfällen bestehende Material (36) über einen an einen Aufgabetisch (40) anschließenden Einzugsschacht (42) zugeführt werden kann. Das Pressengehäuse (10) weist auf seiner Vorderseite (44) unterhalb des Aufgabetisches (40) und eines mit Bedienungselementen versehenen Bedienungsfeldes (46) eine um eine Schwenkachse (48) gegenüber dem Pressengehäuse (10) verschwenkbare Entnahmeklappe (50) auf, in der die Umlenkrollen (26, 28, 30) drehbar gelagert sind, so daß sie beim Öffnen der Entnahmeklappe (50) zusammen mit dieser nach unten verschwenkbar sind.

Die Umlenkrollen (16, 18, 20, 22, 24, 32) sind auf im Pressengehäuse (10) stationär angeordneten Lagerböcken gelagert, während die als Spannrolle ausgebildete Umlenkrolle (14) am freien Ende eines am Pressengehäuse (10) angelenkten, entgegen der Kraft zweier Gasdruckfedern (52) verschwenkbaren Schwenkarmes (54) gelagert ist. Das Mitnahmeband (34) ist derart über die Umlenkrollen und die Antriebsrolle (12) geführt, daß der sich beim Zuführen von Material durch den Einzugsschacht (42) zum im wesentlichen zylindrischen Ballenraum (56) aufweitende Keilspalt (38) nach unten zu gegenüber dem Gehäuse (10) vollständig geschlossen ist. Die Umlenkrollen (16, 18, 20, 22, 24, 26) für die Rückführung des Mitnahmebandes (34) von der Umlenkrolle (28) zur Spannrolle (14) sind so angeordnet, daß mit zunehmendem Ballendurchmesser ein Zurückweichen der einander gegenüberliegenden Bandbereiche (34a, 34b) und damit die Vergrößerung des Ballenraumes (56) möglich ist. Am unteren Ende des Keilspalts (38) wird das Mitnahmeband (34) unter Freilassung eines schmalen Spaltes (58) zwischen dem auf die Antriebsrolle (12) auflaufenden und dem von der Antriebsrolle (12) ablaufenden Trum (34a, 34b) zwischen zwei Umlenkrollen (32, 30) hindurchgeführt, die bei geschlossener Entnahmeklappe (50) in geringem Abstand voneinander angeordnet sind. Der schmale Spalt (58) verhindert, daß die in entgegengesetzter Richtung bewegten Mitnahmebandabschnitte (34a, 34b) beim Betrieb der Ballenpresse aneinander reiben. Ein im Spalt (58) zwischen den Bandabschnitten (34a, 34b) angeordneter, in der Zeichnung nicht dargestellter Abstreifer verhindert das Eindringen von Papier oder Folie zwischen das Mitnahmeband (34) und die Antriebsrolle (12).

Bei geschlossener Entnahmeklappe (50) weisen die beiden Umlenkrollen (30, 32) von der Antriebsrolle (12) einen Abstand auf, der der Stärke des Mitnahmebandes (34) entspricht, so daß dieses auf dem größtmöglichen Umschlingungswinkel von ca. 320 Grad mit seiner dem Ballenraum (56) zugewandten Deckseite gegen die Antriebsrolle (12) anliegt.

Das von der Spannrolle (14) zur Umlenkrolle (32) geführte, auf die Antriebsrolle (12) auflaufende Trum (34a) des Mitnahmebandes (34) begrenzt bei leerem Keilspalt (38) (Fig.1) mit seinem oberen Bereich (34c) den Einzugsschacht (42) an dessen unterer, hinterer, dem Materialaufgabetisch (40) abgewandten Seite, so daß in den Einzugsschacht (42) eingeführtes Material vom Mitnahmeband (34) nach unten in den Keilspalt (38) gezogen wird. Eine an der Unterkante der vorderen Leitfläche (60) des Einzugsschachtes (42) angeordnete, drehbar gelagerte Einzugsrolle (62) dient zur Verringerung der Reibung zwischen der Unterkante der Leitfläche (60) und dem Mitnahmeband (34), das bei leerem Keilspalt (38) an der Einzugsrolle (62) tangential anliegt (Fig.1). Während des Betriebs der Ballenpresse erleichtert die Einzugsrolle (62) das Einziehen des Materials das zwischen der Unterkante der Leitfläche (60) und dem Mitnahmeband (34) flachgepreßt und bereits vorverdichtet wird.

Ein unterhalb der Einzugsrolle (62) zwischen dieser und der Umlenkrolle (28) angeordneter Abstreifer (63) verhindert, daß Material nach oben aus dem Ballenraum (56) entweichen kann und begünstigt gleichzeitig die Bildung des Zylinderballens (68).

Eine im oberen, hinteren Bereich des Einzugsschachtes (42) angeordnete, mit dem Pressengehäuse (10) starr verbundene Leitwand (64) lenkt das über den Aufgabetisch (40) zugeführte Material nach unten zum Mitnahmeband (34) hin um. Ihre Unterkante (66) ist in geringem Abstand vom Mitnahmeband (34) angeordnet, so daß ein Eindringen von Material zwischen Leitwand (64) und Mitnahmeband (34) verhindert wird.

Auf der Oberseite des Pressengehäuses (10) ist eine Halterung (65) für eine drehbar gelagerte Folienrolle angeordnet, von der nach Fertigstellung des Zylinderballens (68) Folie abgezogen und dem Einzugsschacht (42) über eine freilaufende Rolle (67) zugeführt werden kann.

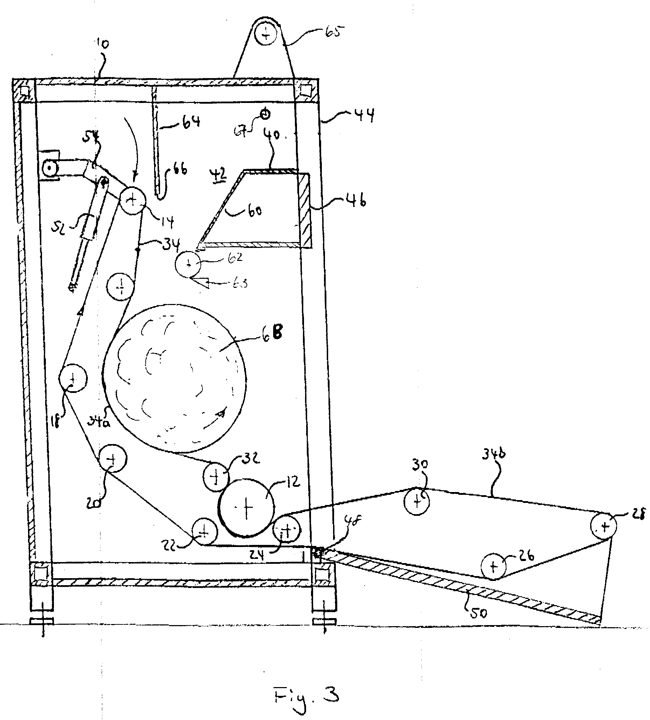

Bei nach unten geklappter Entnahmeklappe (50) (Fig.3) bildet die Deckseite des von der Antriebsrolle (12) ablaufenden Trums (34b) des Mitnahmebandes (34) die Oberseite der Entnahmeklappe (50), so daß der verdichtete Zylinderballen (68) nach Erreichen eines vorgegebenen Enddurchmessers beim Öffnen der Entnahmeklappe (50) über die Antriebsrolle (12) hinweg entnommen werden kann. Durch kurzzeitiges Antreiben des Mitnahmebandes (34) kann der fertige Zylinderballen (68) auch automatisch ausgetragen werden. Die Drehrichtung der Antriebsrolle (12) muß dazu nicht geändert werden, da das auflaufende Trum (34a) des Mitnahmebandes (34) bei normaler Drehrichtung der Antriebsrolle (12) den Zylinderballen (68) aus der in Fig. 3 dargestellten Lage über die Antriebsrolle (12) hinweg auf das ablaufende Trum (34b) transportiert, von dem es weitertransportiert und über die bei aufgeklappter Entnahmeklappe (50) äußerste Umlenkrolle (28) abwirft.

Durch das Verschwenken der in der Entnahmeklappe (50) gelagerten Umlenkrolle (30) beim Öffnen der Entnahmeklappe (50) verringert sich der Umschlingungswinkel des Mitnahmebandes (34) auf der Antriebsrolle (12), bis diese bei vollständig geöffneter Entnahmeklappe auf einem Großteil ihrer Umfangsfläche (68) freiliegt. Eventuell zwischen die Antriebsrolle (12) und die Deckseite des Mitnahmebandes (34) eingedrungene Papier- oder Folienschnipsel können dadurch leicht beseitigt werden. Der verbleibende Umschlingungswinkel ist jedoch ausreichend, um das Mitnahmeband (34) zum automatischen Austragen des fertigen Zylinderballens (68) anzutreiben.

Der von den Teilbereichen (34a, 34b) des Mitnahmebandes (34) umschlossene Ballenraum (56) wird an seinen Stirnseiten durch jeweils eine im Pressengehäuse (10) montierte Seitenwand (72) begrenzt. Die Seitenwände (72) weisen in ihrem oberen, hinteren Teil jeweils eine kreissegmentförmige Ausnehmung (74) auf, durch welche die über das Mitnahmeband (34) seitlich überstehenden Stirnenden der Spannrolle (14) und Teile des Schwenkarms (54) mit den oberen Anlenkpunkten der Gasdruckfedern (52) hindurchgreifen. Der untere Anlenkpunkt der Gasdruckfedern (52) befindet sich jeweils an der Außenseite der Seitenwände (72).

Eine der Seitenwände (72) weist im Bereich der Antriebsrolle (12) eine in Führungsschienen (74) in vertikaler Richtung verschiebbare, eine Entnahmeöffnung (76) für die Antriebsrolle (12) verschließende Platte (78) auf. Die Platte (78) ist in ihrem unteren Teil mit einer nach unten offenen Ausnehmung für den Durchtritt der Antriebswelle versehen, die die Antriebsrolle (12) mit einem auf der Außenseite der Seitenwand (72) angeordneten Kettenrad (80) verbindet, das über eine Gliederkette (82) von einem im Pressengehäuse (10) befestigten Elektromotor (84) angetrieben wird.

Beim Betrieb der Ballenpresse wird bei geschlossener Entnahmeklappe (50) über den Materialaufgabetisch (40) loses, zu verdichtendes Material wie Kartonagen-, Papier- oder Folienabfälle in den Einzugsschacht (42) eingeführt, wo es von dem den Einzugsschacht (42) nach hinten begrenzenden Mitnahmeband (34) erfaßt und nach unten in den keilförmigen Spalt (38) (Fig. 1) gezogen wird. Beim Passieren der Einzugsrolle (62) wird es zwischen dem vorgespannten Mitnahmeband (34) und der Einzugsrolle (62) flachgedrückt und vorverdichtet, bevor es im Keilspalt (38) von den einander gegenüberliegenden, in entgegengesetzte Richtungen nach unten bzw. nach oben bewegten Bandbereichen (34a, 34b) in eine Drehbewegung entgegen dem Uhrzeigersinn versetzt wird, wobei sich ein zylindrischer Wickelkern bildet, auf dessen Umfangsfläche nachfolgend zugeführtes Material unter stetiger Vergrößerung des Ballendurchmessers aufgewickelt wird. Durch die von der Gasdruckfeder (52) auf die Umlenkrolle (14) und damit auf das Mitnahmeband (34) ausgeübte Spannkraft werden dabei die einander gegenüberliegenden Bandbereiche (34a, 34b) gegen einander gegenüberliegende Umfangsflächen des sich drehenden Zylinderballens (68) angepreßt und so das Material während des Aufwickelns weiterverdichtet.

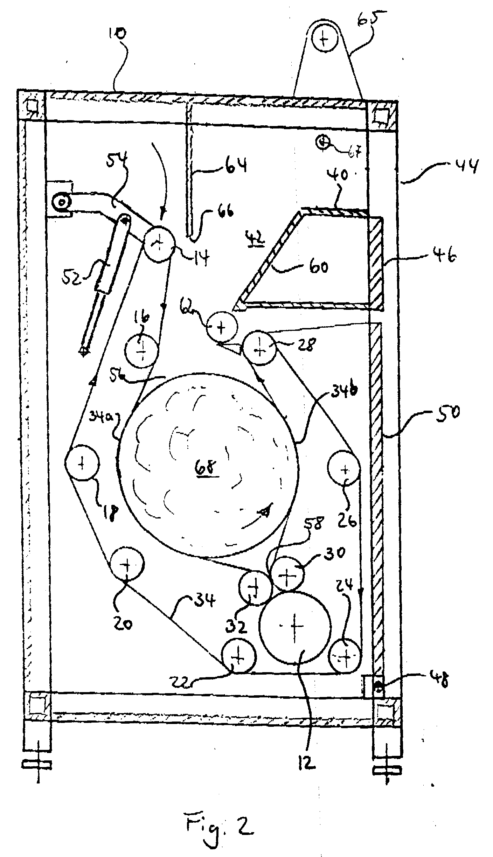

Mit zunehmendem Ballendurchmesser werden die einander gegenüberliegenden Bandbereiche (34a, 34b) unter Aufweitung des Keilspalts (38) zum im wesentlichen zylindrischen Ballenraum (56) in Richtung auf die Umlenkrollen (18 bzw. 26) hin ausgelenkt, bis bei Erreichen des Ballenenddurchmessers das auflaufende Trum (34a) des Mitnahmebands (34) an der Umlenkrolle (16) anliegt und dort geringfügig nach hinten umgelenkt wird (Fig. 2).

Die den Grad der Verdichtung bestimmende Flächenpressung zwischen den Bandbereichen (34a, 34b) und der Umfangsfläche des Zylinderballens (68) bleibt bei zunehmendem Ballendurchmesser im wesentlichen gleich, da sich zwar einerseits die Anlagefläche durch das Zurückweichen der Bandbereiche (34a, 34b) vergrößert, andererseits aber gleichzeitig mit zunehmender Auslenkung des Schwenkarms (54) die Kraft der Gasdruckfeder und damit der Bandspannung steigt.

Sobald der Zylinderballen (68) seinen Enddurchmesser erreicht hat, wird ein im Bereich des Schwenkarms (54) angeordneter Endschalter ausgelöst, der mit einer entsprechenden Anzeige auf dem Bedienungsfeld (46) gekoppelt ist. Die Zufuhr von weiterem Material wird daraufhin eingestellt, und von der Rollenhalterung ein Stück dünne, dehnbare Folie, vorzugsweise mit der Breite des Einzugschachts (42) oder Abfallmaterial einer derartigen Folie mit einem Ende in den Einzugsschacht (42) eingeführt, wobei der Antriebsmotor (84) der Ballenpresse noch so lange eingeschaltet bleibt, bis sich die Folie mehrere Male um den Zylinderballen (68) gewickelt hat. Durch Ausüben einer Zugkraft auf das hintere Ende der Folie kann der Zylinderballen (68) regelrecht zusammengeschnürt und damit ein Auseinanderfallen oder ein Herausfallen von Material während des anschließenden Transports bzw. der Lagerung verhindert werden.

Nach Abschalten des Antriebsmotors (84) wird die Entnahmeklappe (50) manuell geöffnet, und der fertige Zylinderballen (68) von dem die Oberseite der Entnahmeklappe (50) bildenden, ablaufenden Trum (34b) des Mitnahmebands (34) aus dem Ballenraum (38) heraustransportiert. Nach anschließendem Schließen der Entnahmeklappe (50) ist die Ballenpresse erneut betriebsbereit.

Zum wartungsbedingten Austausch des Mitnahmebandes (34) wird die in Führungsschienen (74) der Seitenwand (72) verschiebbare Platte (78) so weit nach oben verschoben, bis die Antriebsrolle (12) in Richtung ihrer Drehachse durch die Entnahmeöffnung (76) herausgenommen werden kann. Anschließend werden die Umlenkrollen (14, 16, 18, 20, 22, 24, 32) ausgehängt und zusammen mit dem Mitnahmeband (34) durch die geöffnete Entnahmeklappe (50) entnommen. Das Mitnahmeband (34) läßt sich jedoch auch ohne ein Entfernen der Antriebsrolle (12) entnehmen, wodurch der Zeitund Arbeitsaufwand bei Wartungsarbeiten, die eine Entnahme des Mitnahmebandes (34) beinhalten, erheblich reduziert werden kann. Dadurch daß das Mitnahmeband (34) mit seiner dem Ballenraum zugewandten Deckseite an der Antriebsrolle (12) anliegt, wird diese nicht von der vom Mitnahmeband (34) gebildeten Bandschleife umfaßt. Das Mitnahmeband (34) kann daher nach Aushängen der Umlenkrollen (14, 16, 18, 20, 22, 24, 32) unterhalb der Antriebsrolle (12) und an dieser vorbei durch die Entnahmeöffnung aus dem Pressengehäuse herausgezogen werden. Der Ausbau der Antriebsrolle (12), der in der Regel wesentlich komplizierter ist als der Ausbau von Umlenkrollen, kann so vermieden werden.

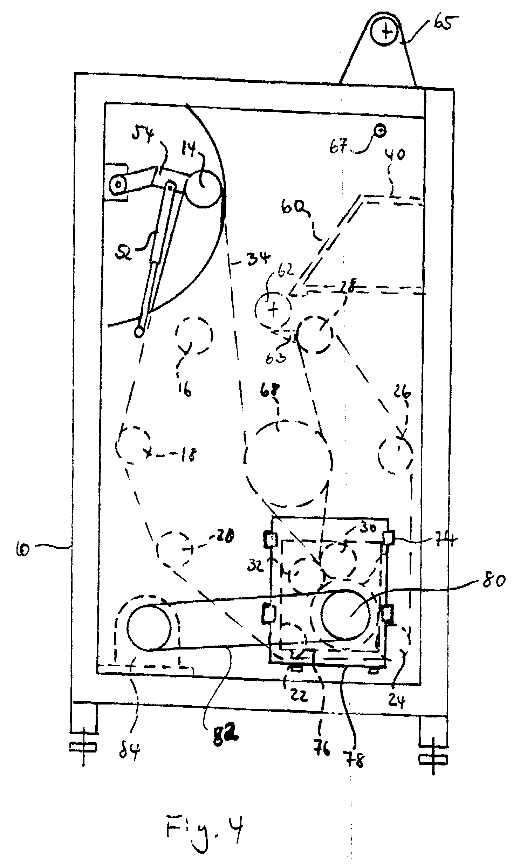

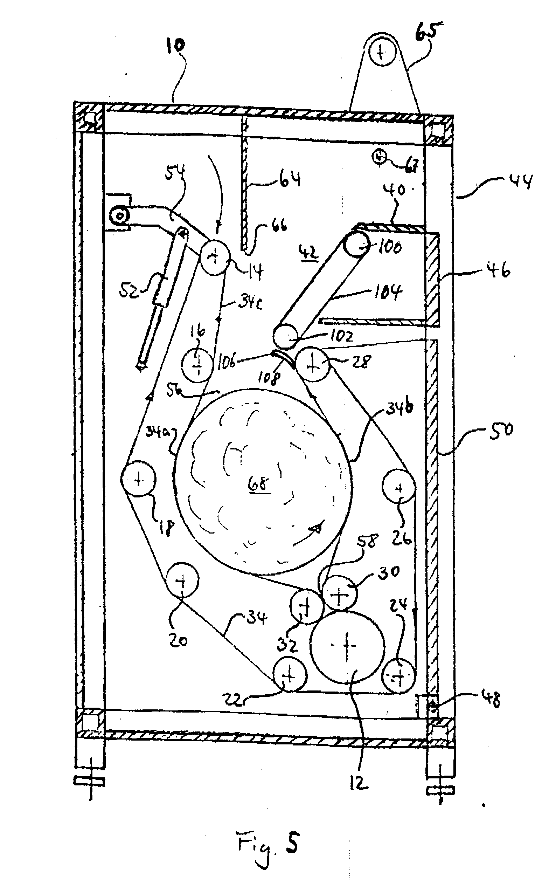

Im Unterschied zu der in den Figuren 1 bis 4 dargestellten Ballenpresse, die nur ein einziges Mitnahmeband (34) aufweist, ist bei der in Fig. 5 gezeigten Ballenpresse an Stelle der vorderen Leitwand (60) des Einzugschachtes (42) zusätzlich zu dem angetriebenen Mitnahmeband (34) ein auf zwei Umlenkrollen (100, 102) frei beweglich gelagertes Mitnahmeband (104) vorgesehen. Das Mitnahmeband (104) wird vom eingezogenen Material (36) mitbewegt, wenn dieses beim Berühren des oberen Bereichs (34c) des Mitnahmebandes (34) nach unten in den Einzugschacht (42) gezogen wird. Das Mitnahmeband (104) verhindert, daß das lose, zu verdichtende Material (36) im Einzugschacht (42) hängenbleibt und erleichtert so dessen Einzug. Ein unterhalb der unteren Umlenkrolle (102) angeordnetes, konkav nach unten gebogenes Leitblech (106) mit einer dem Ballenraum (56) zugewandten Gleitfläche (108) begrenzt bei dieser Ballenpresse den Ballenraum (56) nach oben zu und verhindert, daß der Zylinderballen (68) das frei bewegliche Band (104) entgegen der in Fig. 5 durch den Pfeil A angegebenen Laufrichtung bewegt. Das Leitblech (106) liegt dabei mit seiner einen Stirnkante am ablaufenden Trum (34b) des Mitnahmebands (34) an und wirkt so als Abstreifer.

## Patentansprüche

1. Ballenpresse zum Formen von im wesentlichen zylindrischen Ballen (68) aus Kartonagen-, Papier- oder Folienabfällen oder derartigem Material(36), bei der das einem Ballenraum (56) zuführbare Material (36) im Ballenraum (56) von mindestens einem, den Ballenraum (56) parallel zu einer den fertigen Ballen (68) durchziehenden Zylinderachse mindestens teilweise umschließenden, antreibaren Mitnahmeband (34) in eine Drehbewegung versetztbar und dabei von dem mindestens bereichsweise gegen das Material (36) anpressbaren Mitnahmeband (34) verdichtbar ist, mit mindestens einer von einem der Mitnahmebänder (34) mindestens teilweise umschlungenen motorisch antreibbaren Antriebsrolle (12), an der das Mitnahmeband (34) mit seiner dem Ballen (68) zugewandten Deckseite anliegt, dadurch gekennzeichnet, daß das Mitnahmeband (34) unter Zugspannung derart über Umlenkrollen (14, 16, 18, 20, 22, 26, 28, 30, 32) geführt ist, daß einander gegenüberliegende Bereiche (34 a, 34 b) des Mitnahmebandes (34) beim Zuführen von Material (36) zum im wesentlichen zylindrischen Ballenraum (56) zurückweichen.

2. Ballenpresse nach Anspruch 1, dadurch gekennzeichnet, daß das Mitnahmeband (34) unter Bildung eines sich nach oben öffnenden keilförmigen Spaltes (38) unter Zugspannung derart über Umlenkrollen (14, 16, 18, 20, 22, 24, 26, 28, 30, 32) geführt ist, daß einander gegenüberliegende Bereiche (34a, 34b) des Mitnahmebandes (34) beim Zuführen von Material (36) in den keilförmigen Spalt (38) unter Aufweitung des Spaltes (38) zum im wesentlichen zylindrischen Ballenraum (56) zurückweichen.

3. Ballenpresse nach Anspruch 1 oder 2, dadurch gekennzeichnet, daß sich das Mitnahmeband (34) in Richtung der Zylinderachse des fertigen Zylinderballens (68) über die gesamte Breite des Ballenraums (56) erstreckt.

4. Ballenpresse nach einem der Ansprüche 1 bis 3, dadurch gekennzeichnet, daß der Ballenraum (56) von einem einzigen Mitnahmeband (34) umschlossen ist.

5. Ballenpresse nach einem der Ansprüche 1 bis 4, dadurch gekennzeichnet, daß der Umschlingungswinkel des Mitnahmebandes (34) auf der Antriebsrolle (12) mehr als 270 Grad, vorzugsweise mehr als 300 Grad beträgt.

6. Ballenpresse nach einem der Ansprüche 1 bis 5, dadurch gekennzeichnet, daß das auf die Antriebsrolle (12) auflaufende und das von der Antriebsrolle ablaufende Trum des Mitnahmebandes (34) zwischen zwei in geringem Abstand voneinander angeordneten Umlenkrollen (32, 30) hindurchgeführt werden.

7. Ballenpresse nach Anspruch 6, dadurch gekennzeichnet, daß zwischen dem ablaufenden und dem auflaufenden Trum des Mitnahmebandes ein schmaler Spalt (58) freibleibt.

8. Ballenpresse nach Anspruch 7, dadurch gekennzeichnet, daß der Spalt (58) eine Spaltbreite von weniger als 2 mm, vorzugsweise von weniger als 0,5 mm aufweist.

9. Ballenpresse nach einem der Ansprüche 6 bis 8, dadurch gekennzeichnet, daß der Abstand zwischen der Antriebsrolle (12) und den Umlenkrollen (32, 30) im wesentlichen der Stärke des Mitnahmebandes (34) entspricht.

10. Ballenpresse nach einem der Ansprüche 1 bis 9, gekennzeichnet durch eine mindestens eine Umlenkrolle (26, 28, 30) für das Mitnahmeband (34) aufweisende, unter Öffnung des Ballenraums (56) gegenüber einem Pressengehäuse (10) verschwenkbare Entnahmeklappe (50).

11. Ballenpresse nach Anspruch 10, dadurch gekennzeichnet, daß die Entnahmeklappe (50) um eine zur Zylinderachse des fertigen Zylinderballens (68) parallele Achse nach unten verschwenkbar ist.

12. Ballenpresse nach Anspruch 10 oder 11, dadurch gekennzeichnet, daß die Oberseite der nach unten geschwenkten geöffneten Entnahmeklappe (50) durch das Mitnahmeband (34) gebildet ist.

13. Ballenpresse nach Anspruch 12, dadurch gekennzeichnet, daß die Oberseite der geöffneten Entnahmeklappe (50) von dem von der Antriebsrolle (12) ablaufenden Trum (34b) des Mitnahmebandes (34) gebildet ist.

14. Ballenpresse nach einem der Ansprüche 10 bis 13, dadurch gekennzeichnet, daß der schmale Spalt (58) zwischen dem ablaufenden und dem auflaufenden Trum des Mitnahmebands (34) beim Öffnen der Entnahmeklappe (50) vergrößert wird.

15. Ballenpresse nach einem der Ansprüche 10 bis 15, dadurch gekennzeichnet, daß der Umschlingungswinkel des Mitnahmebandes (34) auf der Antriebsrolle (12) bei geöffneter Entnahmeklappe (50) weniger als 180 Grad, vorzugsweise weniger als 120 Grad beträgt.

16. Ballenpresse nach einem der Ansprüche 10 bis 15, gekennzeichnet durch mindestens eine an einem am Pressengehäuse (10) angelenkten, entgegen der Kraft einer Feder (52) verschwenkbaren Schwenkarm (54) drehbar gelagerte Umlenkrolle (14) für das Mitnahmeband (34).

17. Ballenpresse nach Anspruch 16, dadurch gekennzeichnet, daß die Feder (52) als Gasdruckfeder ausgebildet ist.

18. Ballenpresse nach einem der Ansprüche 1 bis 17, dadurch gekennzeichnet, daß das eine Seite eines Einzugsschachts (42) bildende Mitnahmeband (34) bei leerem oder wenig gefülltem Ballenraum (56) an einer an der gegenüberliegenden Seite des Einzugsschachtes (42) drehbar gelagerten Einzugsrolle (62) anliegt.

19. Ballenpresse nach Anspruch 18, dadurch gekennzeichnet, daß das Mitnahmeband (34) tangential an der Einzugsrolle (62) anliegt.

20. Ballenpresse nach einem der Ansprüche 10 bis 19, dadurch gekennzeichnet, daß die Antriebsrolle (12) in Achsrichtung durch eine verschließbare Öffnung (76) des Pressengehäuses (10) entnehmbar ist.

21. Ballenpresse nach Anspruch 20, dadurch gekennzeichnet, daß das Mitnahmeband (34) zusammen mit den Umlenkrollen (14, 16, 18, 20, 22, 24, 32) durch die Entnahmeklappe (50) entnehmbar ist.

22. Ballenpresse nach einem der Ansprüche 1 bis 21, dadurch gekennzeichnet, daß der Ballenraum (56) nach unten zu gegenüber dem Pressengehäuse (10) vollständig geschlossen ist.

23. Ballenpresse nach einem der Ansprüche 1 bis 22, dadurch gekennzeichnet, daß der Ballenraum (56) mindestens teilweise durch eine Gleitfläche (108) begrenzt ist.

24. Ballenpresse nach einem der Ansprüche 1 bis 23, gekennzeichnet durch mindestens ein frei beweglich gelagertes, den Einzugsschacht (42) oder den Ballenraum (56) begrenzendes Band (104).

## Claims

1. A baling press for forming substantially cylindrical bales (68) from cardboard packaging, paper or film waste or the like material (36), in which the material (36) which can be fed to a bale space (56) is caused to rotate with a rotary motion in the bale space (56) by at least one drivable entrainment belt (34) which at least partially surrounds the bale space (56) in parallel relationship to a cylinder axis passing through the finished bale (68), and in that operation said material can be compacted by the entrainment belt (34) which can be pressed at least in a region-wise manner against the material (36), with at least one drive roller (12) which can be driven by motor means and around which one of the entrainment belts (34) at least partially extends and against which the entrainment belt (34) bears with its cover side that is towards the bale (68), characterised in that the entrainment belt (34) is passed under a tensile stress over direction-changing rollers (14, 16, 18, 20, 22, 26, 28, 30, 32) in such a way that mutually oppositely disposed regions (34a, 34b) of the entrainment belt (34) move back upon the feed of material (36) to the substantially cylindrical bale space (56).

2. A baling press according to claim 1 characterised in that the entrainment belt (34) is passed under a tensile stress over direction-changing rollers (14, 16, 18, 20, 22, 24, 26, 28, 30, 32), forming an upwardly opening wedge-shaped gap (38), in such a way that mutually oppositely disposed regions (34a, 34b) of the entrainment belt (34) move back upon the feed of material (36) into the wedge-shaped gap (38), with an increase in the width of the gap (38), to the substantially cylindrical bale space (56).

3. A baling press according to claim 1 or claim 2 characterised in that the entrainment belt (34) extends in the direction of the cylinder axis of the finished cylindrical b ale (68) over the entire width of the bale space (56).

4. A baling press according to one of claims1 to 3 characterised in that the bale space (56) is enclosed by a single entrainment belt (34).

5. A baling press according to one of claims 1 to 4 characterised in that the angle through which the entrainment belt (34) passes around the drive roller (12) is more than 270°, preferably more than 300°.

6. A baling press according to one of claims 1 to 5 characterised in that the run of the entrainment belt (34) which runs on to the drive roller (12) and the entrainment belt run which runs off the drive roller are passed through between two direction-changing rollers (32, 30) which are arranged at a small spacing from each other.

7. A baling press according to claim 6 characterised in that a narrow gap (58) remains free between the runs of the entrainment belt which run on to and off the drive roller.

8. A baling press according to claim 7 characterised in that the gap (58) is of a gap width of less than 2 mm, preferably less than 0.5 mm.

9. A baling press according to one of claims 6 to 8 characterised in that the spacing between the drive roller (12) and the direction-changing rollers (32, 30) substantially corresponds to the thickness of the entrainment belt (34).

10. A baling press according to one of claims 1 to 9 characterised by a discharge flap (50) which has at least one direction-changing roller (26, 28, 30) for the entrainment belt (34) and which is pivotable relative to a press housing (10), for opening the bale space (56).

11. A baling press according to claim 10 characterised in that the discharge flap is pivotable downwardly about an axis which is parallel to the cylinder axis of the finished cylindrical bale (68).

12. A baling press according to claim 10 or claim 11 characterised in that the top side of the downwardly pivoted opened discharge flap (50) is formed by the entrainment belt (34).

13. A baling press according to claim 12 characterised in that the top side of the opened discharge flap (50) is formed by the run (34b) of the entrainment belt (34), which runs off the drive roller (12).

14. A baling press according to one of claims 10 to 13 characterised in that the narrow gap (58) between the runs of the entrainment belt (34) which run on to and off the drive roller is increased in size upon opening of the discharge flap (50).

15. A baling press according to one of claims 10 to 15 characterised in that the angle through which the entrainment belt (34) passes around the drive roller (12) is less than 180°, preferably less than 120°, when the discharge flap (50) is open.

16. A baling press according to one of claims 10 to 15 characterised by at least one direction-changing roller (14) for the entrainment belt (34), which direction-changing roller is rotatably mounted on a pivot arm (54) which is pivotably mounted to the press housing (10) and which is pivotable in opposition to the force of a spring (52).

17. A baling press according to claim 16 characterised in that the spring (52) is in the form of a gas compression spring.

18. A baling press according to one of claims 1 to 17 characterised in that when the bale space (56) is empty or only little filled, the entrainment belt (34) which forms one side of an intake shaft (42) bears against an intake roller (62) rotatably mounted at the opposite side of the intake shaft (42).

19. A baling press according to claim 18 characterised in that the entrainment belt (34) bears tangentially against the intake roller (62).

20. A baling press according to one of claims 10 to 19 characterised in that the drive roller (12) is removable in the axial direction through a closable opening (76) in the press housing (10).

21. A baling press according to claim 20 characterised in that the entrainment belt (34) together with the direction-changing rollers (14, 16, 18, 20, 22, 24, 32) is removable through the discharge flap (50).

22. A baling press according to one of claims 1 to 21 characterised in that the bale space (56) is completely closed downwardly with respect to the press housing (10).

23. A baling press according to one of claims 1 to 22 characterised in that the bale space (56) is at least partially defined by a sliding surface (108).

24. A baling press according to one of claims 1 to 23 characterised by at least one freely movably mounted belt (104) which defines the intake shaft (42) or the bale space (56).

## Revendications

1. Presse à balles pour former des balles (68) essentiellement cylindriques de déchets de carton, de déchets de papier ou de déchets de films ou de matériau similaire (36), dans laquelle le matériau (36) introduit dans la chambre de compression (56) est mis en rotation par au moins une courroie entrâineuse (34) entraînée, qui entoure au moins partiellement la chambre de compression (56), parallèlement à un axe de cylindre traversant la balle terminée (68), et est compressé par la courroie entraîneuse (34) appliquée sur le matériau (36), comportant au moins un cylindre d'entraînement (12) qui est entraîné par un moteur, est au moins partiellement entouré par une des courroies entraîneuses (34 ) et avec lequel la courroie entraîneuse (34) est en contact par sa face tournée vers la balle (68), caractérisée par le fait que la courroie entraîneuse (34), soumise à une tension, est guidée sur des cylindres de renvoi (14, 16, 18, 20, 22, 26, 28, 30, 32) de telle sorte que des zones (34a, 34b) mutuellement en vis-à-vis de la courroie entraîneuse (34) s'écartent lors de l'introduction de matériau (36) en direction de la chambre de compression (56) essentiellement cylindrique.

2. Presse à balles selon la revendication 1, caractérisée par le fait que la courroie entraîneuse (34) est guidée sous contrainte de traction sur des cylindres de renvoi (14, 16, 18, 20, 22, 24, 26, 28, 30, 32) en formant une fente en forme de coin, ouverte vers le haut, de telle sorte que des zones (34a, 34b) mutuellement en vis-à-vis de la courroie entraîneuse (34), lors de l'introduction de matériau (36) dans la fente (38) en forme de coin, s'écartent en élargissant la fente (38) en direction de la chambre de compression (56) essentiellement cylindrique.

3. Presse à balles selon la revendication 1 ou 2, caractérisée par le fait que la courroie entraîneuse (34) s'étend dans la direction de l'axe de cylindre de la balle cylindrique (68) terminée, sur toute la largeur de la chambre de compression (56).

4. Presse à balles selon une des revendications 1 à 3, caractérisée par le fait que la chambre de compression (56) est entourée par une courroie entraîneuse (34) unique.

5. Presse à balles selon une des revendications 1 à 4, caractérisée par le fait que l'angle d'enroulement de la courroie entraîneuse (34) sur le cylindre d'entraînement (12) est supérieur à 270 °, de préférence supérieur à 300 °.

6. Presse à balles selon une des revendications 1 à 5, caractérisée par le fait que le brin entrant sur le cylindre d'entraînement (12) et le brin sortant du cylindre d'entraînement de la courroie entraîneuse (34) passent entre deux cylindres de renvoi (32, 30) qui sont disposés à faible distance l'un de l'autre.

7. Presse à balles selon la revendication 6, caractérisée par le fait qu'il subsiste une fente (58) étroite entre le brin sortant et le brin entrant de la courroie entraîneuse.

8. Presse à balles selon la revendication 7, caractérisée par le fait que la fente (58) présente une largeur inférieure à 2 mm, de préférence inférieure à 0,5 mm.

9. Presse à balles selon une des revendications 6 à 8, caractérisée par le fait que la distance entre le cylindre d'entraînement (12) et les cylindres de renvoi (32, 30) correspond essentiellement à l'épaisseur de la courroie entraîneuse (34).

10. Presse à balles selon une des revendications 1 à 9, caractérisée par un volet de déchargement (50) qui présente au moins un cylindre de renvoi (26, 28, 30) pour la courroie entraîneuse (34) et petit pivoter par rapport à un corps de presse (10) en ouvrant la chambre de compression (56).

11. Presse à balles selon la revendication 10, caractérisée par le fait que le volet de déchargement (50) peut pivoter vers le bas autour d'un axe parallèle à l'axe de cylindre de la balle cylindrique (68) terminée.

12. Presse à balles selon la revendication 10 ou 11, caractérisée par le fait que la face supérieure du volet de déchargement (50) ouvert, basculé vers le bas, est formée par la courroie entraîneuse (34).

13. Presse à balles selon la revendication 12, caractérisée par le fait que la face supérieure du volet de déchargement (50) ouvert est formée par le brin (34b) de la courroie entraîneuse (34) sortant du cylindre d'entraînement (12).

14. Presse à balles selon une des revendications 10 à 13, caractérisée par le fait que la fente étroite (58) entre les brins entrant et sortant de la courroie entraîneuse (34) est élargie lors de l'ouverture du volet de déchargement (50).

15. Presse à balles selon une des revendications 10 à 14, caractérisée par le fait que l'angle d'enroulement de la courroie entraîneuse (34) sur le cylindre d'entraînement (12), lorsque le volet de déchargement (50) est ouvert, est inférieur à 180 °, de préférence inférieur à 120 °.

16. Presse à balles selon une des revendications 10 à 15, caractérisée par au moins un cylindre de renvoi (14) pour la courroie entraîneuse (34), monté tournant sur un bras oscillant (54) qui est articulé sur le carter de presse (10) et peut pivoter à l'encontre de la force d'un ressort (52).

17. Presse à balles selon la revendication 16, caractérisée par le fait que le ressort (52) est agencé sous la forme d'un ressort à pression de gaz.

18. Presse à balles selon une des revendications 1 à 17, caractérisée par le fait que la courroie entraîneuse (34) qui forme l'un des côtés d'une trémie d'entrée (42), lorsque la chambre de compression (56) est vide ou faiblement remplie, est en contact avec un cylindre d'entrée (62) monté tournant sur le côté opposé de la trémie d'entrée (42).

19. Presse à balles selon la revendication 18, caractérisée par le fait que la courroie entraîneuse (34) est appliquée tangentiellement sur le cylindre d'entrée (62)

20. Presse à balles selon une des revendications 10 à 19, caractérisée par le fait que le cylindre d'entraînement (12) peut être retiré du carter de presse à balles (10) dans la direction de l'axe par une ouverture (76) fermée.

21. Presse à balles selon la revendication 20, caractérisée par le fait que la courroie entraîneuse (34) et les cylindres de renvoi (14, 16, 18, 20, 22, 24, 32) peuvent être retirés du carter de presse à balles (10) par le volet de déchargement (50).

22. Presse à balles selon une des revendications 1 à 21, caractérisée par le fait que la chambre de compression (56) est entièrement fermé vers le bas par rapport au carter de presse (10).

23. Presse à balles selon une des revendications 1 à 22, caractérisée par le fait que la chambre de compression (56) est au moins partiellement délimitée par une surface de glissement (108).

24. Presse à balles selon une des revendications 1 à 23, caractérisée par au moins une courroie (104) montée libre en rotation qui délimité la trémie d'entrée (42) ou la chambre de compression (56).
